# EUROPEAN PATENT SPECIFICATION

(11) **EP 2 949 248 B1**
(45) Date of publication and mention of the grant of the patent: **26.10.2016**
(21) Application number: 15168766.2
(22) Date of filing: 21.05.2015
(51) Int. Cl.: A47J 45/06

(54) **FOLDING STYLE HANDLE STRUCTURE FOR COOKWARE**
FALTGRIFFSTRUKTUR FÜR KOCHGESCHIRR
STRUCTURE DE POIGNÉE DE STYLE PLIABLE POUR USTENSILE DE CUISINE

(30) Priority: 29.05.2014 KR 20140065133
(43) Date of publication of application: 02.12.2015
(73) Proprietor: Lee, Dong Woo, Busan (KR); Park, Min Gyu, Busan (KR)
(72) Inventor: Lee, Dong Woo, Busan (KR); Park, Min Gyu, Busan (KR)
(74) Representative: Habermann, Hruschka & Schnabel

(56) References cited:
- EP-A1- 1 817 996
- EP-A1- 2 601 871
- JP-U- 3 104 786
- KR-B1- 101 257 822
- US-B1- 7 793 389

## Description

### [Technical Field]

The present invention relates to a foldable handle structure for cookware of any kind, which allows turning of the handle along the edge of the cookware so that the latter can be conveniently stored.

### [Background Art]

In general, most cookware, such as e.g. pans, comprise handles being arranged on one side of the vessel of the cookware and which are protruding from said vessel in a fixed manner, which makes it inconvenient or difficult to properly stack the cookware together with the handle in cupboards or kitchen cabinets. Furthermore, when placing such a fixed-handle style cookware on a table, it may prevent a free or convenient use of chopsticks and cutlery while being at the table.

In order to take care of such spatial constraints, various techniques related to foldable handles have been developed in the prior art. For example, Korean Utility Model registration no. 20-045455 (Folding Style Handle Structure in Cookware) discloses a grip, a bracket protruding from the outer wall of the cookware, an arm being arranged between the bracket and the grip, a first hinge shaft connecting with one part of the arm and the bracket, a second hinge shaft connecting the other part of the arm and the grip, and a foldable handle with a supportive member to support the grip.

However, most of the conventional foldable handles are configured to be foldable in an up- or downward direction only, when seen in relation to the center of the cookware, which still proves to be inconvenient when stacking it in a kitchen cabinet for storage.

Furthermore, most foldable structures for cookware as known in the prior art comprise a complex structure and their manufacturing unit price is not economically reasonable. From e.g. US 7,793,389 B1 a cookware is known which comprises a vessel and a handle being attached to said vessel in a foldable manner by means of a joint mechanism, in which the joint mechanism comprises a ball joint which is configured to allow both a rotating and tilting movement of the handle in relation to the vessel, and in which the ball joint comprises an operating unit for locking and unlocking the handle.

### [Summary of Invention]

### [Technical Problem]

To solve the above-mentioned problems, it is the objective of the present invention to provide a better foldable handle for cookware with a turning structure, so that users can easily turn the handle in either direction in relation to the cookware for the purpose of its easy storage.

### [Solution]

Such objective is realized by a cookware according to claim 1. Further embodiments are defined by the dependent claims.

The invention suggests a cookware comprising a vessel and a handle being attached to said vessel in a foldable manner by means of a joint mechanism, wherein the joint mechanism comprises a ball joint which is configured to allow both a rotating and tilting movement of the handle in relation to the vessel.

According to the invention, the ball joint comprises an operating unit for locking and unlocking the handle by a user on demand.

The operating unit comprises an operating element being slideably arranged in a housing of the ball joint. Preferably, the operating element is resiliently supported e.g. by means of at least one spring in such a way that a user has to act against the pretension to unlock the mechanism. In turn, the spring serves to always keep the operating element in the locked condition upon use of the cookware.

According to a preferred embodiment of the invention, a ball of the ball joint comprises a groove for receiving the operating element in the locking state, whereas the operating element is preferably configured as a rod, which will be received by the groove lengthwise.

Furthermore, the ball of the ball joint may comprise at least one protruding pin, which radially extends from the ball and which is to be received in a guiding groove of the housing of the ball joint. The pin is able to slide in the guiding groove, which is arc-shaped, accordingly, so that, when the operating element is unlocked, the handle can be rotated in both directions and finally tilted towards the vessel of the cookware.

The operating element may extend to both sides of the housing of the ball joint so as to be exposed and to be tangible by hand. For that purpose, both ends of the operating element may comprise some kind of button, grip or similar for easy gripping by the user.

In a preferred embodiment of the cookware according to the invention, the grip of the handle comprises a shape and curvature, which follows the contour of the vessel, so that in the folded state, the handle can as closely as possible be attached to the circumference of the vessel, which allows convenient storage.

### [Advantageous Effect of Invention]

The cookware according to the invention comprising a handle as explained above allows that the handle can be easily folded by turning it to the left or right of the cookware. Such folding structure makes it easier and more convenient to keep and stack the cookware with other kitchen utensils. Allowing a foldable handle of such kind reduces the overall volume of such cookware. Moreover, a curved line and shape of the handle adds up to its appearance and stylishness.

### [Brief Description of Drawings]

FIG. 1 is an exploded perspective view of a foldable handle structure for a cookware according to the invention;
FIG. 2 is a perspective view of the foldable handle structure for a cookware according to the invention in the assembled state;
FIG. 3 is a cross-sectional view of a ball joint to be employed in a foldable handle structure for a cookware according to the invention;
FIG.4 exemplarily shows the way of operation of the foldable handle structure for a cookware according to the invention; and
FIG.5 is a perspective view showing the unfolded/locked state and the folded/unlocked state of the foldable handle structure for a cookware according to the invention.

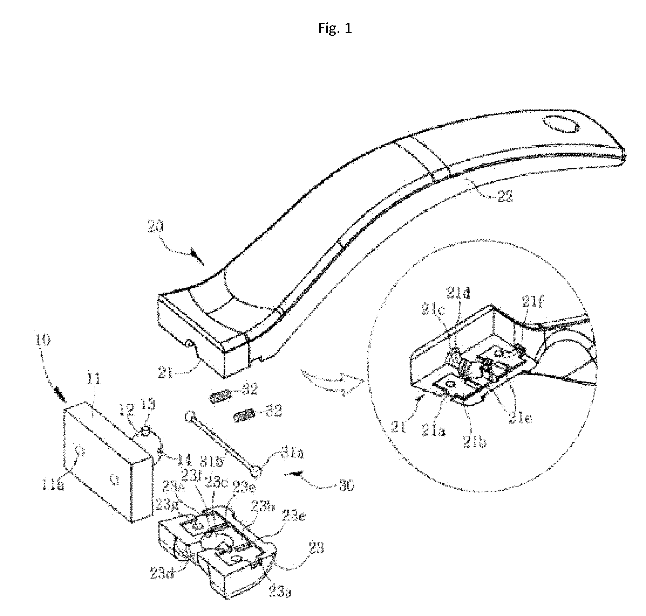

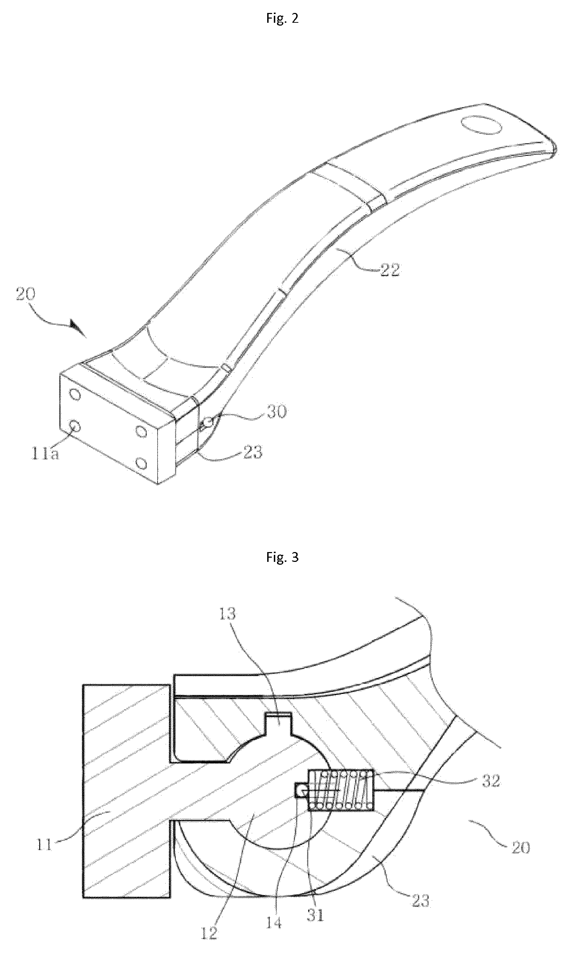

FIG.1 is an exploded perspective view of a foldable handle structure, and FIG.2 is a combined perspective view of the foldable handle structure according to the invention. Furthermore, FIG.3 is a cross-sectional view showing a ball joint of the foldable handle structure according to the invention.

Basically, the folding style handle structure for any kind of cookware consists of a bracket 10, a handle 20 and a ball joint being arranged between the bracket 10 and the handle 20 and comprising an operating unit 30.

The bracket 10 consists of a fixing unit 11, which comprises through holes 11a, so that the bracket 10 can be fastened to a vessel 1 of the cookware by suitable means. However, the bracket can be also made integral with the vessel 1 of the cookware. As can be particularly seen in Fig. 3, the fixing unit 11 further comprises a ball 12 being integral with the fixing unit 11.

The handle 20 comprises a connecting unit 21, which forms one half of the housing for the ball joint. The other half of the housing of the ball joint is formed by a joint cap 23. The joint cap 23 comprises bolting holes 23g, which are aligned with bolting holes 21f of the connecting unit 21, so that both elements can be fastened together by suitable means thereby enclosing the ball 12 of the ball joint.

In the assembled state of the vessel 1 and the handle 20, the ball 12 of the ball joint is both received in an upper bearing 21c of the connecting unit 21 and a lower bearing 23c of the joint cap 23, as can be best seen in Fig. 3.

The upper bearing 21c comprises an arc-shaped guide groove 21d, which receives a guide pin 13 of the ball 12. The guide pin 13 controls the rotation of the handle 20. The arc-shaped groove 21d further extends into an extension groove 23f being arranged in the lower bearing 23c, to allow a rotation of the handle 20 in both rotational directions a bit larger than 90° for ease of handling.

As can be seen in Fig. 1 and Fig. 3, the ball joint comprises an operating unit 30. The operating unit 30 consists of an operating element, which is shaped like a rod 31b and which comprises at both of its ends a grip or button 31a, respectively, which is preferably spherically shaped.

The connecting unit 21 comprises an upper guide recess 21b, whereas the joint cap 23 comprises a lower guide recess 23b, which, when both the connecting unit 21 and the joint cap 23 are bolted together, form a guide recess in which the rod 31b can be slideably moved back and forth towards the ball 12. Laterally, the buttons 31a of the rod 31b are received in an upper recess 21a of the connecting unit 21 and in a lower recess 23a of the joint cap 23. The buttons 31a protrude from the housing of the ball joint as formed by the connecting unit 21 and the joint cap 23 to the extent, that they can be easily gripped by a user, who then can handle the operating unit.

Both the connecting unit 21 and the joint cap 23 comprise upper spring recesses 21e and lower spring recesses 23e, respectively, which receive springs 32 horizontally. The springs 32, as can best be seen in Fig. 3, cooperate with the rod 31b of the operating unit 30 in such a way that the rod 31b is set under pretension towards the ball 12.

At its circumference the ball 12 comprises a groove 14, which receives the pre-tensioned rod 31b in the locked state of the ball joint. By shifting the rod 31b away from the vessel 1 against the resilient force as exerted by the springs 32, in that the user simply grips the buttons 31a of the operating unit 30, the rod 31b will be released from the groove 14 and the ball joint will be unlocked. The user can now turn the handle 20 in either rotational direction, wherein the rotation of the handle 20 is supported by the guidance of the guide pin 13 in the arc-shaped grooves 21d and 23f. The turning of the handle 20 is further supported in that an extension, with which the ball 12 is integrally attached to the fixing unit 11, is rotatably guided in a variable groove 23d of the joint cap 23 (Fig. 3).

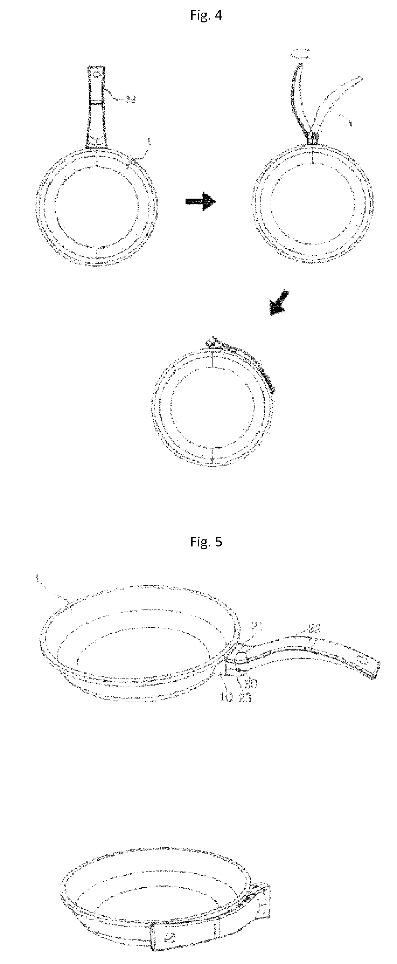

FIG. 4 and FIG. 5 both show the operation and use of the foldable handle structure for a cookware according to the invention.

When the ball joint will be unlocked, as described above, the handle 20 can be turned in either rotational direction so that the concavely shaped grip 22 of the handle 20 can be moved close towards the edge of the vessel 1, whereby the handle 20 can be further rotated around the variable groove 23d of the joint cap 23, till the grip 22 almost congruently adjoins to the outer curved circumference of the vessel 1, which then minimizes the volume of the cookware and make it more convenient to keep or stack it with other kitchen utensils.

### [List of Reference Signs]

- 1: Vessel
- 10: Bracket
- 11: Fixing unit
- 11a: Fastening hole
- 12: Ball
- 13: Guide pin
- 14: Groove
- 20: Handle
- 21: Connecting unit
- 21a: Upper recess
- 21b: Upper guide recess
- 21c: Upper bearing
- 21d: Guide groove
- 21e: Upper spring recess
- 21f: Bolting hole
- 22: Grip
- 23: Joint cap
- 23a: Lower recess
- 23b: Lower guide groove
- 23c: Lower bearing
- 23d: Variable groove
- 23e: Lower spring recess
- 23f: Extension groove
- 23g: Bolting hole
- 30: Operating Unit
- 31a: Button
- 31b: Operating element
- 32: Spring

## Claims

1. Cookware comprising a vessel (1) and a handle (20,22) being attached to said vessel (1) in a foldable manner by means of a joint mechanism (10,11,12,21,23), said joint mechanism (10,11,12,21,23) comprising a ball joint (12,21,23) which is configured to allow both a rotating and tilting movement of the handle (20,22) in relation to the vessel (1), and said ball joint (12,21,23) comprising an operating unit (30) for locking and unlocking the handle (20,22),
**characterized in that**
the operating unit (30) comprises an operating element (31a,31b) being slideably arranged in a housing (21,23) of the ball joint.

2. Cookware according to claim 1, wherein the operating element (31a,31b) is set under pretension.

3. Cookware according to claim 2, wherein a ball (12) of the ball joint comprises a groove (14) for receiving the operating element (31a,31b) in the locked state.

4. Cookware according to claim 2 or 3, wherein a ball (12) of the ball joint comprises at least one protruding pin (13), which is received in a guiding groove (21d,23f) of the housing (21,23) of the ball joint.

5. Cookware according to claims 2 to 4, wherein the operating element (31a,31b) extends to both sides of the housing (21,23) of the ball joint so as to be tangible by hand.

6. Cookware according to one of the preceding claims, wherein a grip (22) of the handle (20) follows the contour of the vessel (1) so as to be closely attached to the vessel (1) in the unlocked state.

## Patentansprüche

1. Kochgeschirr aufweisend ein Gefäß (1) und einen Handgriff (20,22), der an dem Gefäß (1) in einer klappbaren Art und Weise mittels eines Gelenkmechanismus (10,11,12,21,23) angebracht ist, wobei der Gelenkmechanismus (10,11,12,21,23) ein Kugelgelenk (12,21,23) aufweist, das ausgestaltet ist, um eine Dreh- und Schwenkbewegung des Handgriffs (20,22) gegenüber dem Gefäß (1) zu ermöglichen, und wobei das Kugelgelenk (12,21,23) eine Betätigungseinheit (30) zum Sperren und Entsperren des Handgriffs (20,22) aufweist,
**dadurch gekennzeichnet, dass** die Betätigungseinheit (30) eine Betätigungselement (31a,31b) aufweist, das gleitend in einem Gehäuse (21,23) des Kugelgelenks angeordnet ist.

2. Kochgeschirr nach Anspruch 1, bei dem das Betätigungselement (31a,31b) unter einer Vorspannung steht.

3. Kochgeschirr nach Anspruch 2, bei dem eine Kugel (12) des Kugelgelenks eine Nut (14) zur Aufnahme des Betätigungselements (31a,31b) im gesperrten Zustand aufweist.

4. Kochgeschirr nach Anspruch 2 oder 3, bei dem eine Kugel (12) des Kugelgelenks zumindest einen vorstehenden Zapfen (13) aufweist, der in einer Führungsnut (21d,21f) des Gehäuses (21,23) des Kugelgelenks aufgenommen ist.

5. Kochgeschirr nach den Ansprüchen 2 bis 4, bei dem sich das Betätigungselement (31a,31b) zu beiden Seiten des Gehäuses (21,23) des Kugelgelenks derart erstreckt, dass es per Hand greifbar ist.

6. Kochgeschirr nach einem der vorhergehenden Ansprüche, bei dem ein Griff (22) des Handgriffs (20) der Kontur des Gefäßes (1) folgt, so dass dieser im entsperrten Zustand eng an dem Gefäß (1) angeordnet werden kann.

## Revendications

1. Ustensile de cuisine comprenant un récipient (1) et un manche (20, 22) attaché audit récipient (1) d'une manière pliable au moyen d'un mécanisme de joint (10, 11, 12, 21, 23), ledit mécanisme de joint (10, 11, 12, 21, 23) comprenant un joint à rotule (12, 21, 23) configuré de manière à permettre un mouvement à la fois de rotation et d'inclinaison du manche (20, 22) par rapport au récipient (1) et ledit joint à rotule (12, 21, 23) comprenant une unité opérationnelle (30) pour verrouiller et déverrouiller le manche (20, 22), **caractérisé en ce que** l'unité opérationnelle (30) comprend un élément de commande (31a, 31b) qui est agencé de façon coulissante dans un boîtier (21, 23) du joint à rotule.

2. Ustensile de cuisine selon la revendication 1, dans lequel l'élément de commande (31a, 31b) est placé dans une condition de tension préalable.

3. Ustensile de cuisine selon la revendication 2, dans lequel une rotule (12) du joint à rotule comporte une rainure (14) destinée à recevoir l'élément de commande (31a, 31b) dans l'état verrouillé.

4. Ustensile de cuisine selon la revendication 2 ou 3, dans lequel une rotule (12) du joint à rotule comprend au moins une broche saillante (13) qui est reçue dans une rainure de guidage (21d, 23f) du boîtier (21, 23) du joint à rotule.

5. Ustensile de cuisine selon les revendications 2 à 4, dans lequel l'élément de commande (31a, 31b) s'étend sur les deux côtés du boîtier (21, 23) du joint à rotule de manière à pouvoir être touché de la main.

6. Ustensile de cuisine selon l'une des revendications précédentes, dans lequel une zone de prise (22) du manche (20) suit le contour du récipient (1) de manière à être étroitement attaché au récipient (1) dans l'état déverrouillé.
